# EUROPÄISCHE PATENTANMELDUNG

(11) **EP 2 695 803 A1**
(43) Veröffentlichungstag der Anmeldung: **12.02.2014**
(21) Anmeldenummer: 13178825.9
(22) Anmeldetag: 31.07.2013
(51) Int. Cl.: B62J 11/00, B62H 5/00

(54) **Halterung für ein Zweirad-Zubehör**

(30) Priorität: 09.08.2012 DE 102012214211
(71) Anmelder: ABUS August Bremicker Söhne KG, 58300 Wetter-Volmarstein (DE)
(72) Erfinder:
(74) Vertreter: Manitz, Finsterwald & Partner GbR

(57) **Zusammenfassung**

Eine Halterung für ein Zweirad-Zubehör (23), wie beispielsweise für ein Zweirad-Schloss, eine Trinkflasche oder dergleichen, weist einen Halter (11) und ein Fixierband (51) auf. Der Halter (11) umfasst einen Stützabschnitt (15) zum Anliegen an einem Rohrabschnitt (17) eines Zweirads und einen Aufnahmeabschnitt (19) zum Aufnehmen des Zweirad-Zubehörs. Das Fixierband (51) fixiert den Halter (11), den Rohrabschnitt (17) und das Zweirad-Zubehör (23) aneinander. Ein erster Endabschnitt (53) des Fixierbandes (51) verläuft im Bereich des Aufnahmeabschnitts (19) des Halters (11), ein Zwischenabschnitt (55) des Fixierbandes (51) im Bereich des Stützabschnitts (15) und ein zweiter Endabschnitt (57) des Fixierbandes (51) wiederum im Bereich des Aufnahmeabschnitts (19). Ein Wirkabschnitt (61) des Fixierbandes (51) ist entlang eines Teils des ersten Endabschnitts (53) vorgesehen und ein zugeordneter Gegenwirkabschnitt (63) ist entlang eines Teils des zweiten Endabschnitts (57) des Fixierbandes (51) vorgesehen.

## Beschreibung

Die Erfindung betrifft eine Halterung für ein Zweirad-Zubehör, wie beispielsweise für ein Zweirad-Schloss, eine Trinkflasche oder dergleichen.

Eine derartige Halterung wird benötigt, um das betreffende Zubehör dauerhaft oder temporär - beispielweise während einer bestimmten Fahrt - an dem Zweirad zu befestigen. Üblicherweise wird eine derartige Halterung an einem Rohrabschnitt des Rahmens, des Gepäckträgers oder des Sattelrohrs des Zweirads befestigt. Eine Halterung für ein Zweirad-Zubehör ist beispielsweise aus dem Dokument DE 20 2005 013 390 U 1 bekannt.

Um eine Halterung flexibel an unterschiedliche Arten und Durchmesser von Rohrabschnitten des Zweirads anpassen zu können, und um auch Zubehör unterschiedlicher Größe an dem Zweirad befestigen zu können, kann eine Fixiereinrichtung variabler Länge zum Einsatz gelangen. Hierfür kann die Halterung einen Halter und ein Fixierband aufweisen, wobei der Halter einen Stützabschnitt zum Anliegen an dem Rohrabschnitt des Zweirads und einen Aufnahmeabschnitt zum Aufnehmen des Zweirad-Zubehörs umfasst. Das Fixierband ist um den Rohrabschnitt des Zweirads und das Zweirad-Zubehör herum geführt, und das Fixierband weist zumindest einen Wirkabschnitt und einen zugeordneten Gegenwirkabschnitt auf, der mit dem Wirkabschnitt eine lösbare Wirkverbindung bildet, um die Position des Fixierbandes in veränderlicher Weise festlegen zu können.

Eine derartige Halterung ist in dem Dokument US 5 833 188 beschrieben, wobei hier eine zweifache Umlenkung des Fixierbandes an einer gemeinsamen Schnalle gezeigt ist. Die Schnalle ist an einem ersten Endabschnitt des Fixierbandes vorgesehen, wobei zunächst ein Zwischenabschnitt des Fixierbandes an einer ersten Öse der Schnalle umgelenkt wird und wobei ein zweiter Endabschnitt des Fixierbandes an einer zweiten Öse der Schnalle umgelenkt wird. An dem zweiten Endabschnitt des Fixierbandes sind ein Klett-Wirkabschnitt und unmittelbar benachbart hierzu ein zugeordneter Klett-Gegenabschnitt vorgesehen, die aufgrund der Umlenkung an der zweiten Öse aufeinander zu liegen kommen. Die zweite Öse greift in einem Zwischenraum zwischen den beiden Klettabschnitten an dem zweiten Endabschnitt des Fixierbandes an. Ein Problem bei einer derartigen Halterung besteht darin, dass bei zunehmend größerem Durchmesser des umgriffenen Rohrabschnitts des Zweirads und/oder des umgriffenen Zweirad-Zubehörs ein zunehmender relativer Versatz zwischen dem Klett-Wirkabschnitt und dem zugeordneten Klett-Gegenabschnitt auftritt, der aufgrund der Umlenkung des Fixierbandes an einer Stelle zwischen den beiden Klettabschnitten unmittelbar zu einem geringeren Überlappungsgrad der beiden Klettabschnitte führt. Der umgelenkte Klett-Wirkabschnitt oder Klett-Gegenabschnitt kann sogar auf sich selbst zu liegen kommen. Die Klettverbindung wird hierdurch weniger zuverlässig.

Es ist eine Aufgabe der Erfindung, eine Halterung für ein Zweirad-Zubehör zu schaffen, die auch für Rohrabschnitte unterschiedlichen Durchmessers und oder für Zubehör unterschiedlichen Durchmessers eine zuverlässige und dennoch leicht lösbare Befestigung ermöglicht.

Diese Aufgabe wird durch eine Halterung mit den Merkmalen des Anspruchs 1 gelöst, und insbesondere dadurch, dass ein erster Endabschnitt des Fixierbandes im Bereich des Aufnahmeabschnitts des Halters, ein Zwischenabschnitt des Fixierbandes im Bereich des Stützabschnitts des Halters und ein zweiter Endabschnitt des Fixierbandes wiederum im Bereich des Aufnahmeabschnitts des Halters verläuft, wobei der Wirkabschnitt des Fixierbandes entlang eines Teils des ersten Endabschnitts und der zugeordnete Gegenwirkabschnitt entlang eines Teils des zweiten Endabschnitts des Fixierbandes vorgesehen sind.

Die Halterung umfasst also einen Halter, der ein Zweirad-Zubehör aufnimmt und der sich mittels eines Fixierbandes an einem Rohrabschnitt eines Zweirads befestigen lässt. Bei dem Fixierband handelt es sich um einen flexiblen Streifen, an dem mindestens ein Wirkabschnitt und mindestens ein zugeordneter Gegenwirkabschnitt vorgesehen sind. Der Wirkabschnitt und der zugeordnete Gegenwirkabschnitt des Fixierbandes sind an zwei aneinander entgegengesetzten Endabschnitten des Fixierbandes angeordnet, und nicht etwa benachbart zueinander. Die zwei Endabschnitte des Fixierbandes sind durch einen sogenannten Zwischenabschnitt getrennt. Das Fixieren des Zubehörs an dem Rohrabschnitt des Zweirads erfolgt letztlich aufgrund der Wirkverbindung zwischen den beiden Endabschnitten des Fixierbandes, welches den Rohrabschnitt und/oder das Zubehör umgreift. Somit kann durch Versetzen des ersten Endabschnitts relativ zu dem zweiten Endabschnitt des Fixierbandes eine gegenseitige Andruckkraft auf den Rohrabschnitt und das Zubehör erzeugt werden. Mittels des Wirkabschnitts und des zugeordneten Gegenwirkabschnitts können der erste Endabschnitt und der zweite Endabschnitt des Fixierbandes in dieser Position relativ zueinander festgelegt werden.

Die Lage des ersten Endabschnitts des Fixierbandes mit dem daran vorgesehenen Wirkabschnitt ist unveränderlich festgelegt und ändert sich insbesondere nicht bei Verwendung der Halterung für unterschiedliche Größen des Rohrabschnitts des Zweirads oder des aufgenommenen Zweirad-Zubehörs. Lediglich die Position des Gegenwirkabschnitts relativ zu dem Wirkabschnitt kann sich ändern. Dies hat den Vorteil, dass auch bei Verwendung für unterschiedliche Größen (insbesondere Durchmesser) des Rohrabschnitts und des Zubehörs ein hoher Überlappungsgrad zwischen dem Wirkabschnitt und dem Gegenwirkabschnitts sichergestellt ist, d.h. es wird eine zuverlässige Wirkverbindung gebildet. Es ist lediglich erforderlich, dass der Gegenwirkabschnitt des Fixierbandes lang genug ausgebildet ist, um in jeder möglichen Position relativ zu dem Wirkabschnitt den Wirkabschnitt vollständig zu überdecken. Dies ist jedoch kein Problem, da in unmittelbarer Umgebung des Gegenwirkabschnitts keine Umlenkung des Fixierbandes erfolgen muss (wie dies beispielsweise an der Schnalle gemäß Dokument US 5 833 188 der Fall ist).

Im Übrigen eignet sich die Halterung besonders gut für eine Ausgestaltung, bei der (wie bei dem Dokument US 5 833 188) der Aufnahmeabschnitt des Halters entlang einer Achse parallel zu der Längsachse des Rohrabschnitts des Zweirads offen ist und der Aufnahmeabschnitt des Halters auch umfänglich offen ist, um in flexibler Weise die Aufnahme von unterschiedlich großem und unterschiedlich geformtem Zubehör zu ermöglichen.

Im Zusammenhang mit der Erfindung ist noch anzumerken, dass der genannte Aufnahmeabschnitt und der Stützabschnitt des Halters unmittelbar aneinandergrenzen oder ineinander übergehen können. Beispielsweise kann im Falle einer C- oder U-Form des Aufnahmeabschnitts ein Schenkel oder die Basis der C- oder U-Form unmittelbar den Stützabschnitt des Halters bilden.

Ferner ist anzumerken, dass der genannte Wirkabschnitt des Fixierbandes durch einen Klett-Wirkabschnitt und der zugeordnete Gegenwirkabschnitt des Fixierbandes durch einen Klett-Gegenabschnitt gebildet sein kann, wobei der Klett-Wirkabschnitt und der zugeordnete Klett-Gegenabschnitt eine lösbare Klettverbindung bilden. Hierbei kann eine beliebige Art von Klettverbindung vorgesehen sein, beispielsweise nach dem Widerhaken-/Schlaufen-Prinzip oder dem Pilzkopf-/Pilzkopf-Prinzip. Allerdings ist eine Klettverbindung nicht zwingend erforderlich. Beispielsweise kann eine lösbare Wirkverbindung zwischen dem ersten Endabschnitt und dem zweiten Endabschnitt des Fixierbandes auch durch einen Druckknopf oder drehbaren Knebelknopf (= Wirkabschnitt) und eine Anordnung von mehreren zugeordneten Ösen (= Gegenwirkabschnitt) gebildet werden.

Es ist vorteilhaft, wenn das Zweirad-Zubehör, der Halter und der Rohrabschnitt des Zweirads in einer Ebene senkrecht zu der Längsachse des Rohrabschnitts von dem Fixierband umgriffen werden. Dadurch lässt sich eine hohe Spannkraft im Fixierband aufbauen, um eine hohe Fixierwirkung zu erzielen.

Bezogen auf die genannte Ebene senkrecht zu der Achse des Rohrabschnitts kann der Aufnahmeabschnitt des Halters, wie bereits erwähnt, umfänglich offen sein und beispielsweise eine C- oder U-Form aufweisen. Im diesem Fall können die beiden Schenkel der C- oder U-Form aufgrund einer Eigenelastizität bereits eine gewisse Haltekraft auf das aufgenommene Zubehör ausüben.

Besonders vorteilhaft ist es, wenn der Aufnahmeabschnitt des Halters eine C- oder U-Form aufweist, die bezogen auf eine gedachte Verbindungslinie zwischen dem Mittelpunkt des Rohrabschnitts des Zweirads und dem Mittelpunkt des aufgenommenen Zweirad-Zubehörs seitlich geöffnet ist. Hierdurch ist eine besonders gute Kraftübertragung von dem Fixierband auf das in den Aufnahmeabschnitt eingesetzte Zubehör möglich, um das Zubehör sicher zu halten.

Das genannte Fixierband kann abschnittsweise oder auf seiner gesamten Länge in Längsrichtung elastisch sein (insbesondere gummielastisch). Hierdurch können besonders gut dauerhaft wirksame Zugkräfte erzeugt werden, um den Halter, den Rohrabschnitt des Zweirads und das Zweirad-Zubehör zuverlässig aneinander zu fixieren.

Vorzugsweise besitzt der erste Endabschnitt des Fixierbandes einen Anker an seinem offenen Ende, mittels dessen das Fixierband sich auf besonders einfache Weise in einer Öffnung am Halter verankern lässt. Eine Verankerung an dem Halter hat den Vorteil, dass eine Zugkraft des Fixierbandes auf den Halter übertragen werden kann, insbesondere ohne die Notwendigkeit eines zusätzlichen Bauteils (z.B. separate Öse). Ein derartiger Anker kann zum Beispiel durch eine Verdickung des Fixierbandes realisiert werden, nämlich indem das Fixierband mehrfach gefaltet und vernäht wird. Alternativ kann an dem ersten Endabschnitt des Fixierbandes allerdings auch ein separates Ankerelement befestigt sein, beispielsweise ein an dem Fixierband vernähter oder von dem Fixierband umschlossener Stift oder ein Plättchen.

Besonders vorteilhaft ist ferner der folgende Verlauf des Fixierbandes: Der erste Endabschnitt des Fixierbandes kann entlang einer Außenfläche des Aufnahmeabschnitts des Halters geführt sein. Der sich an den ersten Endabschnitt anschließende Zwischenabschnitt des Fixierbandes kann dann bei bestimmungsgemäßer Benutzung der Halterung derart um den Rohrabschnitt des Zweirads geführt sein, dass durch Ausübung einer Zugkraft auf das Fixierband der Rohrabschnitt des Zweirads gegen den Stützabschnitt des Halters gedrückt wird. Der sich wiederum an den Zwischenabschnitt anschließende zweite Endabschnitt des Fixierbandes kann letztlich derart entlang der genannte Außenfläche des Aufnahmeabschnitts des Halters geführt sein, dass der Wirkabschnitt des Fixierbandes auf dem zugeordneten Gegenwirkabschnitt des Fixierbandes zu liegen kommt. Somit kann eine auf den zweiten Endabschnitt des Fixierbandes ausgeübte Zugkraft zugleich auf den Aufnahmeabschnitts des Halters und das darin aufgenommene Zubehör sowie auf den Rohrabschnitt des Zweirads wirken. Von Vorteil ist es hierbei, wenn der erste Endabschnitt des Fixierbandes im Halter verankert ist, insbesondere in dem Aufnahmeabschnitt.

Gemäß einer vorteilhaften Ausführungsform weist der Halter einen Umlenkbügel auf, der von dem genannten Stützabschnitt oder dem Aufnahmeabschnitt des Halters absteht, d.h. beabstandet ist. Der Umlenkbügel kann somit dazu angepasst sein, eine von dem Zwischenabschnitt des Fixierbandes gebildete Schlaufe aufzunehmen, während das Fixierband den Rohrabschnitt des Zweirads umgreift. Hierdurch wird also durch einen integralen Abschnitt des Halters eine Umlenkung des Fixierbandes im Bereich des Rohrabschnitts des Zweirads ermöglicht. Eine separate Öse ist nicht erforderlich.

Bei dieser Ausführungsform kann das Fixierband einen weiteren Wirkabschnitt und einen zugeordneten weiteren Gegenwirkabschnitt aufweisen, der mit dem weiteren Wirkabschnitt eine weitere lösbare Wirkverbindung bildet. Diese weitere Wirkverbindung kann die an dem Umlenkbügel des Halters gebildete Schlaufe des Fixierbandes festlegen. Somit bleibt der Halter an dem Rohrabschnitt des Zweirads gesichert, selbst wenn die erläuterte Wirkverbindung zwischen dem ersten Endabschnitt und dem zweiten Endabschnitt des Fixierbandes (d.h. an dem Aufnahmeabschnitt des Halters) gelöst wird, beispielsweise um das Zubehör zu entnehmen oder um die Halterung an ein anderes Zubehör anzupassen.

Gemäß einer Weiterbildung kann der Stützabschnitt des Halters einen Umlenksteg aufweisen, der den Zwischenabschnitt des Fixierbandes in Richtung des genannten Umlenkbügels umlenkt. Auch der Umlenksteg kann an dem Halter integral, d.h. einstückig ausgebildet sein. Somit wird auf einfache Weise eine geeignete Führung des Fixerbandes im Bereich des Stützabschnitts des Halters ermöglicht.

Das Zusammenwirken von Umlenkbügel und Umlenksteg zur Bildung einer Schlaufe des Fixierbandes und die weitere Wirkverbindung an der den Rohrabschnitt umgreifenden Schlaufe ermöglichen auf besonders einfache Weise ein zuverlässiges Fixieren des Halters an dem Rohrabschnitt des Zweirads, da keine zusätzlichen Bauteile erforderlich sind (wie beispielsweise separate Ösen). Der Umlenkbügel und der Umlenksteg können stattdessen an dem Halter integral ausgebildet sein, und an dem Fixierband müssen lediglich der weitere Wirkabschnitt und der zugeordnete weitere Gegenwirkabschnitt vorgesehen sein.

Der genannte Umlenksteg kann gemeinsam mit einem Begrenzungssteg des Stützabschnitts eine umfänglich geschlossene Durchtrittsöffnung begrenzen, durch die das Fixierband geführt ist. Hierdurch ergibt sich eine sichere Führung des Fixierbandes in alle Richtungen.

Gemäß einer weiteren vorteilhaften Ausführungsform weist der Stützabschnitt des Halters eine Eintrittsöffnung und eine hiervon beabstandete Austrittsöffnung auf, wobei der Zwischenabschnitt des Fixierbandes durch die Eintrittsöffnung geführt ist, hiervon ausgehend den Rohrabschnitt des Zweirads umgreift und ohne weitere Umlenkung durch die Austrittsöffnung geführt ist. Hierdurch wird ein besonders einfacher Verlauf des Fixierbandes ermöglicht, der auch für den Benutzer ohne weiteres intuitiv verständlich ist. Ferner lässt sich ein Zweirad-Zubehör an einem Rohrabschnitt mit besonders großem Durchmesser befestigen, solange das Fixierband eine ausreichende Länge aufweist.

Bezüglich sämtlicher der vorgenannten Ausführungsformen ist es von Vorteil, wenn der Halter wenigstens ein Paar von Führungserhebungen aufweist, die von einer Außenfläche des Aufnahmeabschnitts des Halters abstehen und das Fixierband gegen ein seitliches Verrutschen sichern, d.h. gegen ein Verrutschen quer zu der Längserstreckungsrichtung des Fixierbandes. Die Führungserhebungen sind vorzugsweise entsprechend der Breite des Fixierbandes voneinander beabstandet und verlaufen parallel zueinander. Die Führungserhebungen können beispielsweise durch Zungen, Stege und Rippen gebildet sein, die an dem Halter angeformt sind.

Schließlich bezieht sich die Erfindung auch auf ein Zweirad-Zubehör (z.B. Zweirad-Schloss) mit einer Halterung der erläuterten Art.

Die Erfindung wird nachfolgend lediglich beispielhaft anhand der Zeichnungen erläutert. Gleiche oder gleichartige Elemente sind darin mit denselben Bezugszeichen gekennzeichnet.
- Fig. 1: zeigt eine Perspektivansicht einer Halterung gemäß einer ersten Ausführungsform
- Fig. 2: zeigt eine entsprechende Perspektivansicht eines Halters der Halterung ohne Fixierband.
- Fig. 3: zeigt eine weitere Perspektivansicht der Halterung.
- Fig. 4: zeigt eine entsprechende Perspektivansicht lediglich des Halters.
- Fig. 5: zeigt eine weitere Perspektivansicht des Halters.
- Fig. 6: zeigt eine Querschnittsansicht der Halterung, die den Verlauf des Fixierbandes erkennen lässt.
- Fig. 7: zeigt eine entsprechende Querschnittsansicht einer zweiten Ausführungsform.
- Fig. 8: zeigt eine entsprechende Querschnittsansicht einer dritten Ausführungsform.

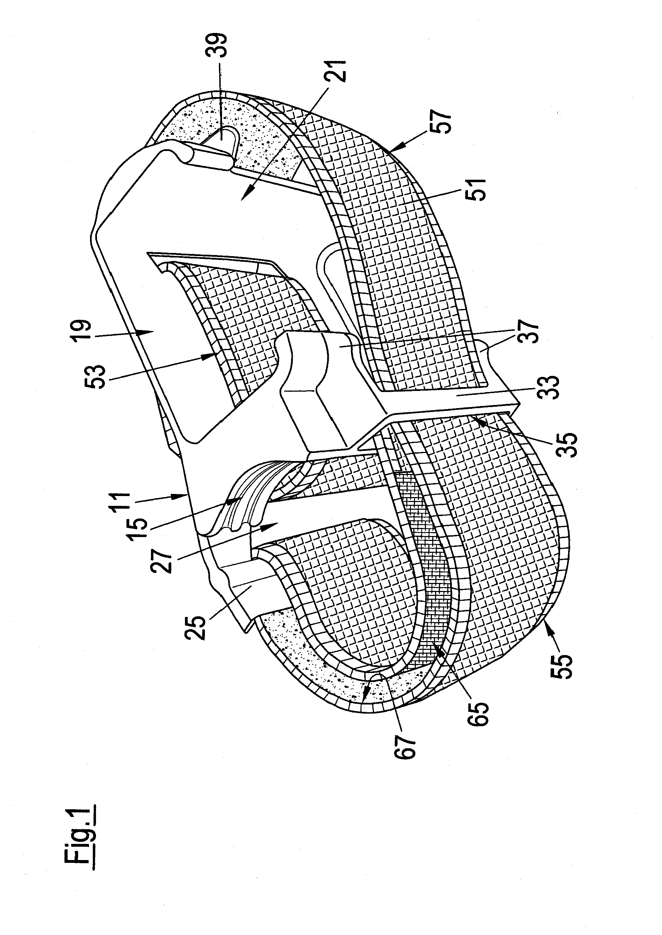

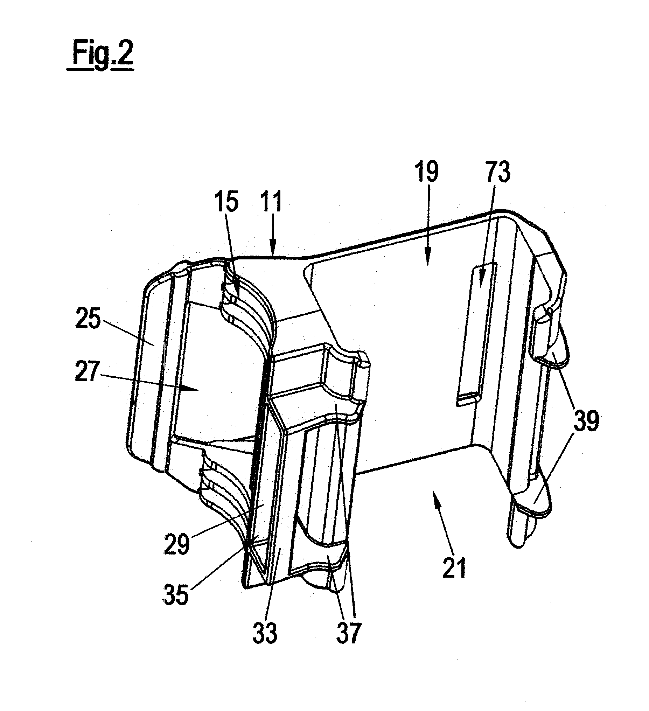

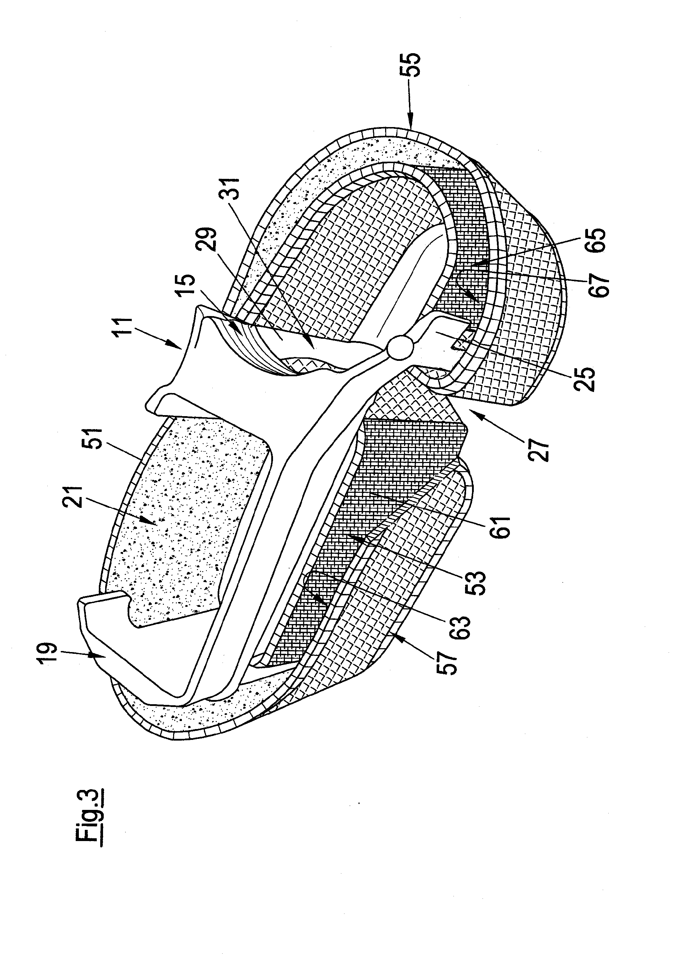

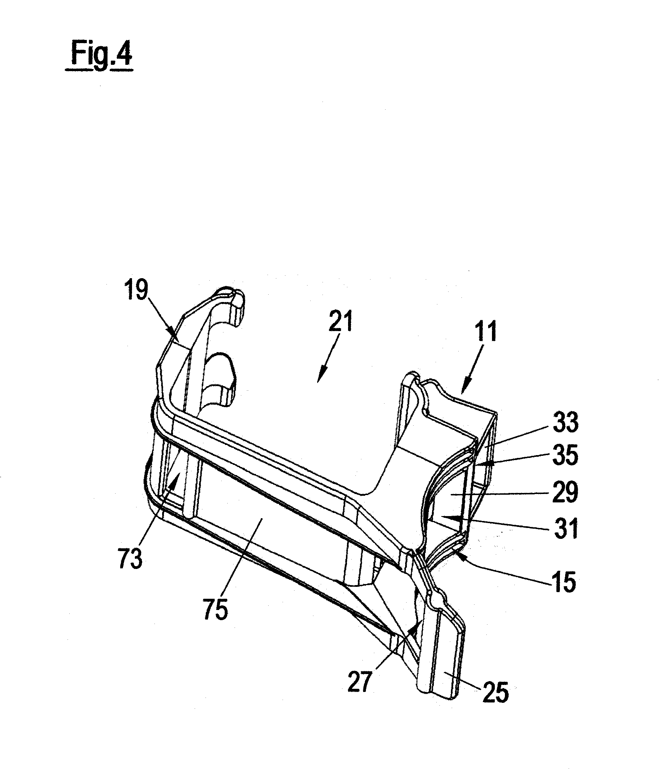

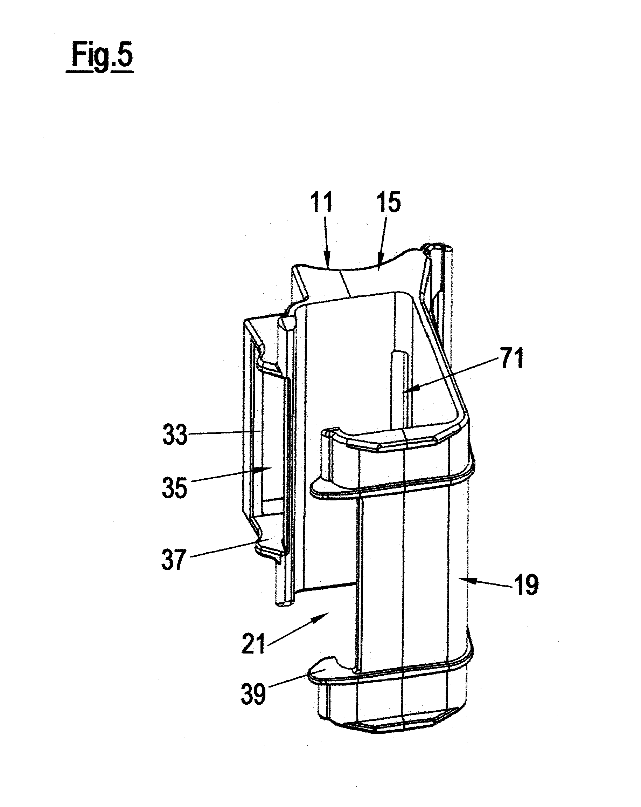

Die in den Fig. 1 bis 6 gezeigte Halterung umfasst einen Halter 11 und ein Fixierband 51. Der Halter 11 weist einen Stützabschnitt 15 auf, der bei bestimmungsgemäßer Benutzung der Halterung an einem Rohrabschnitt 17 eines Zweirads anliegt. Der Stützabschnitt 15 ist an seiner dem Rohrabschnitt 17 zugewandten Seite konkav gewölbt und kann mit einer integrierten oder separaten Gummierung oder dergleichen versehen sein, um die Reibung zu erhöhen und ein Verrutschen des Halters 11 entlang des Rohrabschnitts 17 zu verhindern. Ferner können an dem Stützabschnitt 15 Lamellen vorgesehen sein, wie in dem Dokument DE 20 2005 013 390 U 1 beschrieben ist. Der Halter 11 weist ferner einen Aufnahmeabschnitt 19 auf, der eine Aufnahmeöffnung 21 zum Aufnehmen eines Zweirad-Zubehörs 23 definiert.

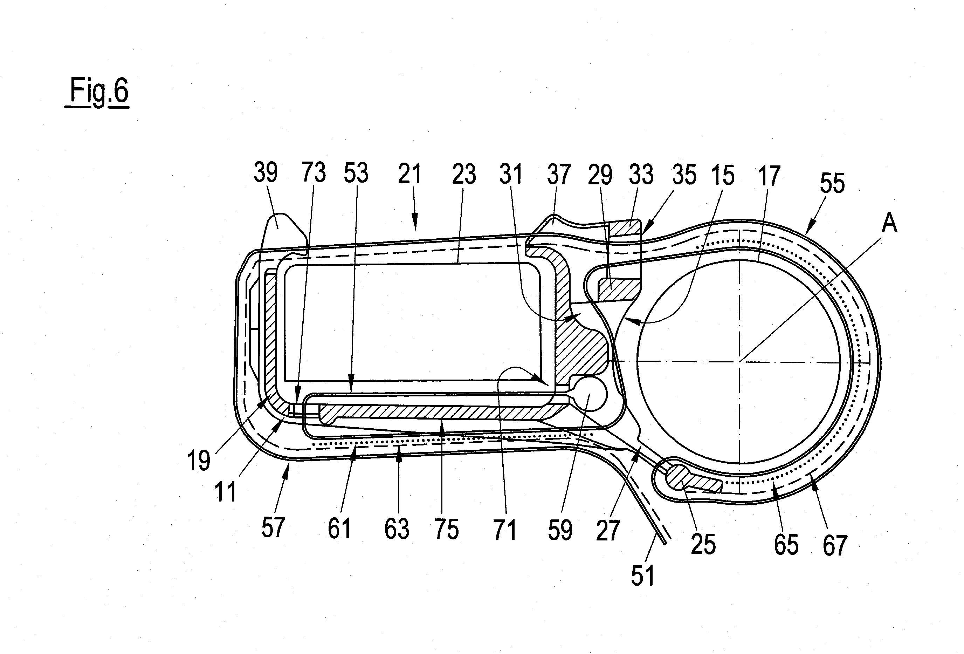

Bei dem hier gezeigten Ausführungsbeispiel ist der Halter 11 durch ein einziges Kunststoffteil gebildet, d.h. der Stützabschnitt 15 und der Auf nahmeabschnitt 19 sind an dem Halter 11 integral ausgebildet. Der Auf nahmeabschnitt 19 besitzt innerhalb der in Fig. 6 gezeigten Ebene, d.h. in einer Ebene senkrecht zu der Achse A des Rohrabschnitts 17, im Wesentlichen eine C-Form, wobei ein Schenkel der C-Form dem Stützabschnitt 15 entspricht. Die offene Seite der C-Form ist hier bezogen auf eine gedachte Verbindungslinie zwischen dem Mittelpunkt des Rohrabschnitts 17 (Achse A) und dem Mittelpunkt des aufgenommenen Zubehörs 23 seitlich angeordnet. Eine derartige Ausrichtung der offenen Seite des Aufnahmeabschnitts 19 ist vorteilhaft, da das Zubehör 23 hierdurch besonders wirkungsvoll verzurrt werden kann. Der Aufnahmeabschnitt 19 könnte allerdings grundsätzlich auch an der von dem Stützabschnitt 15 abgewandten Seite offen sein, wobei der Aufnahmeabschnitt 19 im Wesentlichen eine C-oder U-Form besitzen kann (ähnlich der Halterung gemäß Dokument US 5 833 188). Alternativ könnte der Aufnahmeabschnitt 19 umfänglich geschlossen sein (ähnlich der Halterung gemäß Dokument DE 20 2005 013 390 U1).

Bei dem hier gezeigten Ausführungsbeispiel umfasst der Halter 11 ferner einen Umlenkbügel 25, der in einem Übergangsbereich zwischen dem Stützabschnitt 15 und dem Aufnahmeabschnitt 19 integral an dem Halter 11 ausgebildet ist. Der Umlenkbügel 15 verläuft parallel zu der Achse A des Rohrabschnitts 17 des Zweirads, so dass zwischen dem Umlenkbügel 25 einerseits und dem Stützabschnitt 15 und dem Aufnahmeabschnitt 19 andererseits eine erste Durchtrittsöffnung 27 gebildet ist.

Der Halter 11 umfasst an dem Stützabschnitt 15 außerdem einen Umlenksteg 29, der ebenfalls parallel zu der Achse A des Rohrabschnitts 17 des Zweirads verläuft. Zwischen dem Umlenksteg 29 und dem Stützabschnitt 15 des Halters 11 ist eine zweite Durchtrittsöffnung 31 gebildet. Weiterhin umfasst der Halter 11 an dem Stützabschnitt 15 auch noch einen Begrenzungssteg 33, der benachbart und parallel zu dem Umlenksteg 29 verläuft und gemeinsam mit dem Umlenksteg 29 eine dritte Durchtrittsöffnung 35 begrenzt.

Schließlich umfasst der Halter 11 an dem Stützabschnitt 15 benachbart zu dem Begrenzungssteg 33 ein erstes Paar von nach außen seitlich abstehenden, voneinander beabstandeten Führungserhebungen 37. An dem Aufnahmeabschnitt 19 weist der Halter 11 ein zweites Paar von nach au-ßen seitlich abstehenden, voneinander beabstandeten Führungserhebungen 39 auf. Die Führungserhebungen 39 sind an dem Ende des entsprechenden Schenkels der C-Form des Aufnahmeabschnitts 19 zungenförmig und gehen in Stege über, die sich entlang des Aufnahmeabschnitts 19 jeweils innerhalb einer Ebene erstrecken, die senkrecht zu der Achse A des Rohrabschnitts 17 des Zweirads verläuft.

Das Fixierband 51 ist, wenn die Halterung bestimmungsgemäß an dem Rohrabschnitt 17 des Zweirads befestigt ist und wenn das Zweirad-Zubehör 23 in die Halterung eingesetzt ist, um den Rohrabschnitt 17 und das Zweirad-Zubehör 23 herum geführt.

Das Fixierband 51 ist ein flexibles Gewebeband aus Kunststoff. Es umfasst einen ersten Endabschnitt 53, der bei dem erläuterten Verlauf des Fixierbandes 51 im Bereich des Aufnahmeabschnitts 19 des Halters 11 vorgesehen ist. Ferner umfasst das Fixierband 51 einen sich an den ersten Endabschnitt 53 anschließenden Zwischenabschnitt 55, der bei dem erläuterten Verlauf des Fixierbandes 51 im Bereich des Stützabschnitts 15 des Halters 11 vorgesehen ist. Weiterhin umfasst das Fixierband 51 einen zweiten Endabschnitt 57, der sich an den Zwischenabschnitt 55 anschließt und der bei dem erläuterten Verlauf des Fixierbandes 51 wiederum im Bereich des Aufnahmeabschnitts 19 des Halters 11 vorgesehen ist. An dem ersten Endabschnitt 53 besitzt das Fixierband 51 eine Verdickung 59.

Entlang eines Teils des ersten Endabschnitts 53 weist das Fixierband 51 einen ersten Klett-Wirkabschnitt 61 auf (in Fig. 6 gepunktet dargestellt). Ein zugeordneter erster Klett-Gegenabschnitt 63 ist entlang eines Teils des zweiten Endabschnitts 57 des Fixierbandes 51 vorgesehen (in Fig. 6 gestrichelt dargestellt). Ferner umfasst das Fixierband 51 bei dem in den Fig. 1 bis 6 gezeigten Ausführungsbeispiel einen zweiten Klett-Wirkabschnitt 65 (in Fig. 6 gepunktet dargestellt) und einen zugeordneten zweiten Klett-Gegenabschnitt 67 (in Fig. 6 gestrichelt dargestellt), die entlang eines jeweiligen Teils das Zwischenabschnitts 57 des Fixierbandes 51 vorgesehen sind, nämlich benachbart zu dem Umlenkbügel 25 des Halters 11.

Anhand von Fig. 6 wird nun der Verlauf des Fixierbandes 51 noch genauer erläutert. In der Darstellung gemäß Fig. 6 verläuft die Achse A des Rohrabschnitts 17 des Zweirads senkrecht zu der Schnittebene.

Die Verdickung 59 an dem ersten Endabschnitt 53 des Fixierbandes 51 ist an einer Verankerungsöffnung 71 des Stützabschnitts 15 des Halters 11 eingehängt. Der erste Endabschnitt 53 verläuft zunächst bis zu einer Austrittsöffnung 73 an dem Aufnahmeabschnitt 19 des Halters 11. Auf der anderen Seite der Austrittsöffnung 73 verläuft der erste Endabschnitt 53 des Fixierbandes 51 entlang einer Außenfläche 75 des Aufnahmeabschnitts 19 bis zu der ersten Durchtrittsöffnung 27. Die genannte Außenfläche 75 des Aufnahmeabschnitts 19 stützt die Rückseite des ersten Endabschnitts 53 des Fixierbandes 51 im Bereich des ersten Klett-Wirkabschnitts 61 ab.

Auf der anderen Seite der ersten Durchtrittsöffnung 27 verläuft der Zwischenabschnitt 55 des Fixierbandes 51 entlang des Stützabschnitts 15 des Halters 11 bis zu der zweiten Durchtrittsöffnung 31, durch diese hindurch und bis zu der dritten Durchtrittsöffnung 35. Durch die dritte Durchtrittsöffnung 35 verlässt das Fixierband 51 den Halter 11 und verläuft bis zu dem Umlenkbügel 25, um den Rohrabschnitt 17 des Zweirads zu umgreifen. An dem Umlenkbügel 25 des Halters 11 bildet der Zwischenabschnitt 55 des Fixierbandes 51 eine Schlaufe (Umlenkung um ca. 180°), d.h. ausgehend von dem Umlenkbügel 25 verläuft das Fixierband 51 zurück zu der dritten Durchtrittsöffnung 35 des Stützabschnitts 15. Hiervon ausgehend umgreift der zweite Endabschnitt 57 des Fixierbandes 51 den Aufnahmeabschnitt 19 des Halters 11 und somit das darin aufgenommene Zweirad-Zubehör 23, so dass der zweite Endabschnitt 57 des Fixierbandes 51 entlang der genannten Außenfläche 75 des Aufnahmeabschnitts 19 auf dem ersten Endabschnitt 53 des Fixierbandes 51 zu liegen kommt.

Es ist zu beachten, dass der erste Klett-Gegenabschnitt 63 des zweiten Endabschnitts 57 des Fixierbandes 51 ohne Umlenkung auf dem ersten Klett-Wirkabschnitt 61 des ersten Endabschnitts 53 des Fixierbandes 51 zu liegen kommt. Hierfür befinden sich der erste Klett-Wirkabschnitt 61 und der erste Klett-Gegenabschnitt 63 auf unterschiedlichen Seiten des Fixierbandes 51 (der erste Klett-Wirkabschnitt 61 auf der Außenseite, der erste Klett-Gegenabschnitt 63 auf der Innenseite).

Die Führungserhebungen 37, 39 sichern hierbei das Fixierband 51 gegen ein seitliches Verrutschen, d.h. gegen ein Verrutschen entlang der Achse A des Rohrabschnitts 17 des Zweirads.

Entlang der genannten Außenfläche 75 des Aufnahmeabschnitts 19 des Halters 11 bilden der erste Klett-Wirkabschnitt 61 und der erste Klett-Gegenabschnitt 63 somit eine erste Klettverbindung. Benachbart zu dem Umlenkbügel 25 des Halters 11, d.h. entlang eines Teils des Umfangs des Rohrabschnitts 17 des Zweirads, bilden der zweite Klett-Wirkabschnitt 65 und der zweite Klett-Gegenabschnitt 67 des Fixierbandes 51 eine zweite Klettverbindung.

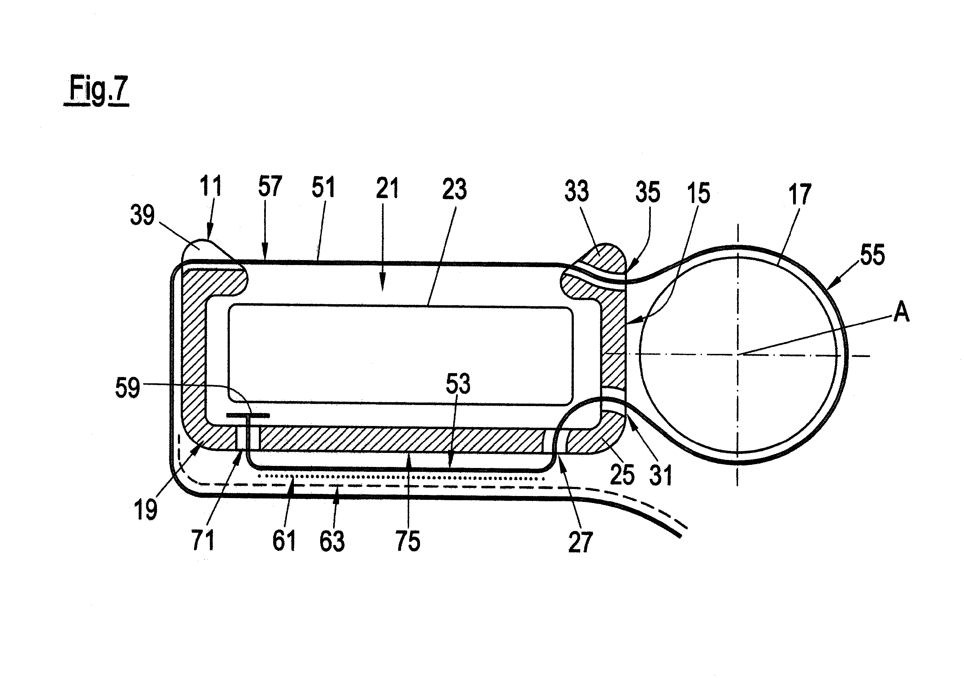

Fig. 7 zeigt in einer der Fig. 6 entsprechenden Querschnittsansicht eine zweite Ausführungsform einer Halterung mit einem einfacheren Aufbau. Im Unterschied zu der ersten Ausführungsform ist hier keine zusätzliche Umlenkung des Fixierbandes 51 (Schlaufe) im Bereich des Rohrabschnitts 17 des Zweirads vorgesehen. Ferner ist die Verdickung 59 des Fixierbandes 51 an einer anderen Stelle verankert.

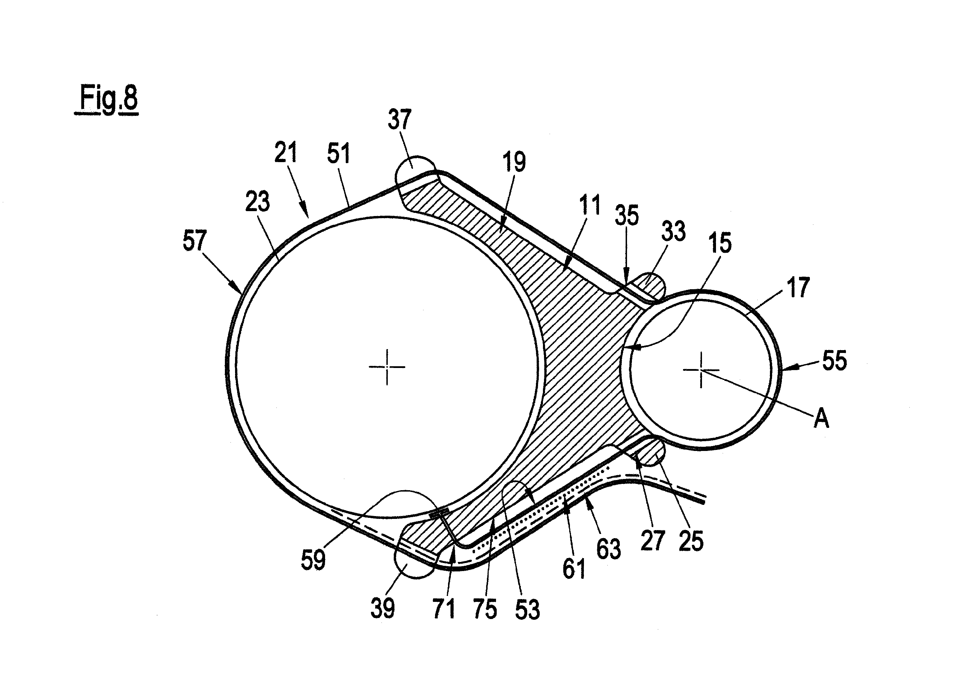

Fig. 8 zeigt eine entsprechende Querschnittsansicht einer dritten Ausführungsform einer Halterung. Die Halterung gemäß Fig. 8 ist ähnlich der Halterung gemäß Fig. 7 aufgebaut, wobei der Aufnahmeabschnitt 19 des Halters 11 hier im Wesentlichen U-förmig ist.

Bei den drei gezeigten Ausführungsformen ist der erste Endabschnitt 53 des Fixierbandes 51 direkt mit dem zweiten Endabschnitt 57 über eine Klettverbindung verbunden (erster Klett-Wirkabschnitt 61 und erster Klett-Gegenabschnitt 53). Hierdurch sind der Halter 11, der Rohrabschnitt 17 des Zweirads und das Zweirad-Zubehör 23 gemeinsam aneinander fixiert. Die Position des ersten Endabschnitts 53 des Fixierbandes 51 ist im Bereich des Aufnahmeabschnitts 19 des Halters 11 festgelegt, d.h. die Position des ersten Endabschnitts 53 des Fixierbandes 51 ist unabhängig von der Größe (z.B. Durchmesser) des Rohrabschnitts 17 des Zweirads und des aufgenommenen Zweirad-Zubehörs 23.

Bei den gezeigten Halterungen ergibt sich der Vorteil, dass auch bei Verwendung für unterschiedliche Größen (z.B. Durchmesser) des Rohrabschnitts 17 des Zweirads und des Zweirad-Zubehörs 23 sichergestellt werden kann, dass der erste Klett-Wirkabschnitt 61 und der zugeordnete erste Klett-Gegenabschnitt 63 stets hinreichend überlappen, um eine zuverlässige Klettverbindung zu bilden. Aus Fig. 6, 7 und 8 ist ersichtlich, dass auch im Falle eines größeren oder kleineren Durchmessers des Rohrabschnitts 17 des Zweirads und des Zweirad-Zubehörs 23 der hinsichtlich seiner Position am Halter 11 festgelegte erste Klett-Wirkabschnitt 61 des Fixierbandes 51 stets vollständig von dem zugeordneten ersten Klett-Gegenabschnitt 63 überdeckt wäre. Der erste Klett-Gegenabschnitt 63 ist nämlich länger als der erste Klett-Wirkabschnitt 61 und würde lediglich seine Relativposition zu dem ersten Klett-Wirkabschnitt 61 ändern, dessen Lage an dem Aufnahmeabschnitt 19 unveränderlich festgelegt ist. Somit muss der erste Klett-Gegenabschnitt 63 lediglich entlang eines hinreichend großen Teils des zweiten Endabschnitts 57 des Fixierbandes 51 vorgesehen sein.

Hingegen wird vermieden, dass der erste Klett-Wirkabschnitt 61 und der zugeordnete erste Klett-Gegenabschnitt 63 an dem Fixierband 51 unmittelbar aneinander angrenzend vorgesehen sind (insbesondere bei an dem ersten Endabschnitt 53 oder beide an dem zweiten Endabschnitt 57 des Fixierbandes 51). Eine solche Ausgestaltung ermöglicht zwar die einfache Bildung einer Schlaufe zum gegenseitigen Kontaktieren der beiden zugeordneten Klettabschnitte 61, 63 (z.B. durch Umfalten des Fixierbandes 51 an einer Öse). Allerdings ergibt sich bei einer solchen Ausgestaltung auch das Problem, dass bei unterschiedlicher Größe des umgriffenen Rohrabschnitts 17 und Zweirad-Zubehörs 23 ein relativer Versatz des ersten Klett-Wirkabschnitts 61 und des zugeordneten ersten Klett-Gegenabschnitts 63 auftritt, der unmittelbar zu einem geringeren Überlappungsgrad der beiden Klettabschnitte 61, 63 führt. Zwar besteht dieses Problem generell auch hinsichtlich des zweiten Klett-Wirkabschnitts 65 und des zugeordneten zweiten Klett-Gegenabschnitts 67 gemäß Fig. 6. Allerdings führt die Schlaufenbildung an dem Umlenkbügel 25 bei der ersten Ausführungsform gemäß Fig. 1 bis 6 nicht dazu, dass der Überlappungsgrad zwischen dem ersten Klett-Wirkabschnitt 61 und dem zugeordneten ersten Klett-Gegenabschnitt 63 verringert wird, welche aufgrund ihrer Anordnung an den beiden Endabschnitten 53, 57 des Fixierbandes 51 letztlich die Fixierung des Zweirad-Zubehörs 23 an dem Rohrabschnitt 17 des Zweirads gewährleisten.

Ein weiterer Vorteil der gezeigten Halterungen besteht darin, dass sämtliche Klettabschnitte 61, 63, 65, 67 an dem Fixierband 51 vorgesehen sind. Hierdurch ergibt sich eine kostengünstige Fertigung der jeweiligen Halterung, da lediglich das Fixierband 51 mit Klettabschnitten (oder sonstigen Wirkabschnitten) versehen werden muss, was auf einfache Weise beispielsweise durch Aufnähen geschehen kann. Ferner sind keine zusätzlichen Ösen erforderlich (wie beispielsweise bei der Halterung gemäß dem Dokument US 5 833 188), sondern die erforderliche Umlenkung des Fixierbandes 51 kann aufgrund integraler Abschnitte des Halters 11 erfolgen (z.B. Umlenkbügel 25, Umlenksteg 29). Die Halterung erfordert lediglich ein einziges Kunststoffteil (Halter 11) und ein hierzu angepasstes Fixierband 51.

### Bezugszeichenliste

- 11: Halter
- 15: Stützabschnitt
- 17: Rohrabschnitt
- 19: Aufnahmeabschnitt
- 21: Aufnahmeöffnung
- 23: Zweirad-Zubehör
- 25: Umlenkbügel
- 27: erste Durchtrittsöffnung
- 29: Umlenksteg
- 31: zweite Durchtrittsöffnung
- 33: Begrenzungssteg
- 35: dritte Durchtrittsöffnung
- 37: Führungserhebung
- 39: Führungserhebung
- 51: Fixierband
- 53: erster Endabschnitt
- 55: Zwischenabschnitt
- 57: zweiter Endabschnitt
- 59: Verdickung
- 61: erster Klett-Wirkabschnitt
- 63: erster Klett-Gegenabschnitt
- 65: zweiter Klett-Wirkabschnitt
- 67: zweiter Klett-Gegenabschnitt
- 71: Verankerungsöffnung
- 73: Austrittsöffnung
- 75: Außenfläche
- A: Achse des Rohrabschnitts

## Patentansprüche

1. Halterung für ein Zweirad-Zubehör (23), wie beispielsweise für ein Zweirad-Schloss, eine Trinkflasche oder dergleichen,
mit einem Halter (11), der einen Stützabschnitt (15) zum Anliegen an einem Rohrabschnitt (17) eines Zweirads und einen Aufnahmeabschnitt (19) zum Aufnehmen des Zweirad-Zubehörs (23) umfasst; und
mit einem Fixierband zum Fixieren des Halters (11), des Rohrabschnitts (17) und des Zweirad-Zubehörs (23) aneinander, wobei das Fixierband zumindest einen Wirkabschnitt (61) und einen zugeordneten Gegenwirkabschnitt (63) aufweist, der mit dem Wirkabschnitt eine lösbare Wirkverbindung bildet, um die Position des Fixierbandes festzulegen, und wobei das Fixierband einen ersten Endabschnitt (53), einen zweiten Endabschnitt (57) und wenigstens einen dazwischen liegenden Zwischenabschnitt (55) aufweist;
**dadurch gekennzeichnet,**
**dass** der erste Endabschnitt (53) des Fixierbandes (51) im Bereich des Aufnahmeabschnitts (19) des Halters, der Zwischenabschnitt (55) des Fixierbandes im Bereich des Stützabschnitts (15) des Halters und der zweite Endabschnitt (57) des Fixierbandes wiederum im Bereich des Aufnahmeabschnitts (19) des Halters verläuft, wobei der Wirkabschnitt (61) des Fixierbandes entlang eines Teils des ersten Endabschnitts und der zugeordnete Gegenwirkabschnitt (63) entlang eines Teils des zweiten Endabschnitts (57) des Fixierbandes vorgesehen sind.

2. Halterung nach Anspruch 1,
**dadurch gekennzeichnet,**
**dass** der Aufnahmeabschnitt (19) des Halters (11) entlang einer Achse parallel zu der Achse (A) des Rohrabschnitts (17) des Zweirads offen ist, wobei der Aufnahmeabschnitt (19) des Halters (11) umfänglich offen ist.

3. Halterung nach Anspruch 1 oder 2,
**dadurch gekennzeichnet,**
**dass** das Fixierband (51) in einer Ebene senkrecht zu der Achse (A) des Rohrabschnitts (17) des Zweirads verläuft und den Rohrabschnitt (17) des Zweirads und das Zweirad-Zubehör (23) umgreift.

4. Halterung nach einem der vorhergehenden Ansprüche,
**dadurch gekennzeichnet,**
**dass** der Aufnahmeabschnitt (19) des Halters (11) in einer Ebene senkrecht zu der Achse (A) des Rohrabschnitts (17) eine C- oder U-Form aufweist, die bezogen auf eine Verbindungslinie zwischen dem Mittelpunkt des Rohrabschnitts (17) und dem Mittelpunkt des Zweirad-Zubehörs (23) seitlich geöffnet ist.

5. Halterung nach einem der vorhergehenden Ansprüche,
**dadurch gekennzeichnet,**
**dass** die Lage des ersten Endabschnitts (53) des Fixierbandes (51) mit dem daran vorgesehenen Wirkabschnitt (61) unabhängig von der Größe des Rohrabschnitts (17) des Zweirads und des Zweirad-Zubehörs (23) festgelegt ist.

6. Halterung nach einem der vorhergehenden Ansprüche,
**dadurch gekennzeichnet,**
**dass** der Wirkabschnitt (61) des Fixierbandes (51) durch einen Klett-Wirkabschnitt und der zugeordnete Gegenwirkabschnitt (63) des Fixierbandes durch einen Klett-Gegenabschnitt gebildet sind, wobei der Klett-Wirkabschnitt und der zugeordnete Klett-Gegenabschnitt eine Klettverbindung bilden.

7. Halterung nach einem der vorhergehenden Ansprüche,
**dadurch gekennzeichnet,**
**dass** das Fixierband (51) an dem ersten Endabschnitt (53) einen Anker (59) aufweist, wobei der Halter eine Verankerungsöffnung (71) aufweist, durch die das Fixierband geführt ist, wobei der Anker (59) an einer Begrenzung der Verankerungsöffnung (71) anliegt, so dass der erste Endabschnitt (53) des Fixierbandes an dem Halter (11) festgelegt ist.

8. Halterung nach einem der vorhergehenden Ansprüche,
**dadurch gekennzeichnet,**
**dass** der erste Endabschnitt (53) des Fixierbandes (51) entlang einer Außenfläche (75) des Aufnahmeabschnitts (19) des Halters (11) geführt ist, wobei der Zwischenabschnitt (55) des Fixierbandes derart um den Rohrabschnitt (17) des Zweirads geführt ist, dass durch Ausübung einer Zugkraft auf das Fixierband der Rohrabschnitt des Zweirads gegen den Stützabschnitt (15) des Halters gedrückt wird, und wobei der zweite Endabschnitt (57) des Fixierbandes wiederum derart entlang der Außenfläche (75) des Aufnahmeabschnitts (19) des Halters geführt ist, dass der Wirkabschnitt (61) des Fixierbandes auf dem zugeordneten Gegenwirkabschnitt (63) des Fixierbandes zu liegen kommt.

9. Halterung nach einem der vorhergehenden Ansprüche,
**dadurch gekennzeichnet,**
**dass** der Halter ferner einen Umlenkbügel (25) aufweist, der von dem Stützabschnitt (15) oder dem Aufnahmeabschnitt (19) absteht und der dazu angepasst ist, eine von dem Zwischenabschnitt (55) des Fixierbandes (51) gebildete Schlaufe aufzunehmen, wenn das Fixierband den Rohrabschnitt (17) des Zweirads umgreift.

10. Halterung nach Anspruch 9,
**dadurch gekennzeichnet,**
**dass** das Fixierband (51) einen weiteren Wirkabschnitt (65) und einen zugeordneten weiteren Gegenwirkabschnitt (67) aufweist, der mit dem weiteren Wirkabschnitt eine weitere lösbare Wirkverbindung bildet, um die an dem Umlenkbügel (25) des Halters gebildete Schlaufe des Fixierbandes (51) festzulegen.

11. Halterung nach Anspruch 9 oder 10,
**dadurch gekennzeichnet,**
**dass** der Stützabschnitt (15) des Halters (11) einen Umlenksteg (29) aufweist, der den Zwischenabschnitt (55) des Fixierbandes (51) in Richtung des Umlenkbügels (25) umlenkt.

12. Halterung nach Anspruch 11,
**dadurch gekennzeichnet,**
**dass** der Umlenksteg (29) gemeinsam mit einem Begrenzungssteg (33) des Stützabschnitts eine umfänglich geschlossene Durchtrittsöffnung (35) begrenzt, durch die das Fixierband (51) geführt ist.

13. Halterung nach einem der Ansprüche 1 bis 8,
**dadurch gekennzeichnet,**
**dass** der Stützabschnitt (15) des Halters eine Eintrittsöffnung (27) und eine hiervon beabstandete Austrittsöffnung (35) aufweist, wobei der Zwischenabschnitt (55) des Fixierbandes (51) durch die Eintrittsöffnung (27) geführt ist, hiervon ausgehend den Rohrabschnitt (17) des Zweirads umgreift und ohne weitere Umlenkung durch die Austrittsöffnung (35) geführt ist.

14. Halterung nach einem der vorhergehenden Ansprüche,
**dadurch gekennzeichnet,**
**dass** der Halter (11) wenigstens ein Paar von Führungserhebungen (37, 39) aufweist, die von einer Außenfläche des Aufnahmeabschnitts (19) des Halters (11) abstehen und das Fixierband (51) gegen ein seitliches Verrutschen sichern.

15. Zweirad-Zubehör (23) mit einer Halterung nach einem der vorhergehenden Ansprüche.
